# EUROPEAN PATENT SPECIFICATION

(11) **EP 1 297 732 B1**
(45) Date of publication and mention of the grant of the patent: **01.03.2006**
(21) Application number: 02021569.5
(22) Date of filing: 26.09.2002
(51) Int. Cl.: A01D 34/86, A01B 63/102

(54) **Articulated hydraulic arm device particularly for an agricultural tool**
Hydraulischer Gelenkarm insbesondere für ein landwirtschaftliches Werkzeug
Bras articulé hydraulique en particulier pour un outil agricole

(30) Priority: 27.09.2001 IT BO20010595
(43) Date of publication of application: 02.04.2003
(73) Proprietor: Ferri S.rl., 44030 Tamara (Ferrara) (IT)
(72) Inventor: Ferri, Sandro, 44100 Ferrara (IT)
(74) Representative: Negrini, Elena

(56) References cited:
- FR-A- 2 638 597
- GB-A- 2 202 122
- GB-A- 2 206 472

## Description

The present invention relates to operating and driving for tools or implements.

Particularly the invention refers to an articulated hydraulic arm device particularly for an agricultural tool, or for house building or for earth moving, such as cutting heads for bushes, millers, destroyer, ducts for fluid concrete, shovels and similar, fit to be installed on self moving vehicles, for instance tractor, truck, concrete mixers, caterpillars and similar or on tow vehicles.

There are known rigid or articulated arm devices suitable to be installed on self-moving vehicles and to support and position tools. Said known devices, operated by respective hydraulic linear actuators, have a first beam whose end is connected to the self moving vehicle by means of an articulated joint allowing the beam to rotate around a vertical axis and a horizontal axis parallel to the same vehicle.

The remaining end supports the tool directly or by means of a second arm, constrained to rotate, with respect to the first arm, around an axis perpendicular to a plane, approximately defined by the first arm and second arm. The second arm can be "U" or "S" shaped so that it is forward curved, in a condition of the first arm approximately lateral and perpendicular to the self-moving mean.

Some known devices have an articulated joint interposed between the arm and the tool to allow its rotation around a single axis.

Document FR 2638597 discloses an articulated hydraulic arm device, particularly for an agricultural tool, and including a first beam means connected to a vehicle through a first articulated joint means and a second beam means rotating with respect to the first beam means and interposed between the latter and the tool. Said device includes an articulated quadrilateral mean, constituted by first and second members and by third and fourth members respectively opposed, and interposed between the first and second beam means.

The main drawback of the known devices consists in that they have tool positioning and orientating restrictions and make difficult and unnatural moving the tool.

Main object of the present invention is to propose an hydraulic arm device particularly for an agricultural tool suitable to be installed on self moving and tow vehicles and fit to orient and position a tool with high freedom of movement, and particularly in rear and front positions with respect to the vehicle, near and at the maximum distance from the vehicle, maintaining the tool in correspondence of the ground and in elevated positions.

Other object is to propose a device easy to be moved and driven by an operator and which can utilize the whole working width of the tool in every operational condition.

Further object of the present invention is to propose a device easy to be manufactured, economical and reliable.

The above-mentioned objects are achieved according to the content of the claims.

The characteristics of the invention are underlined in the following with particular reference to attaches drawings, in which:

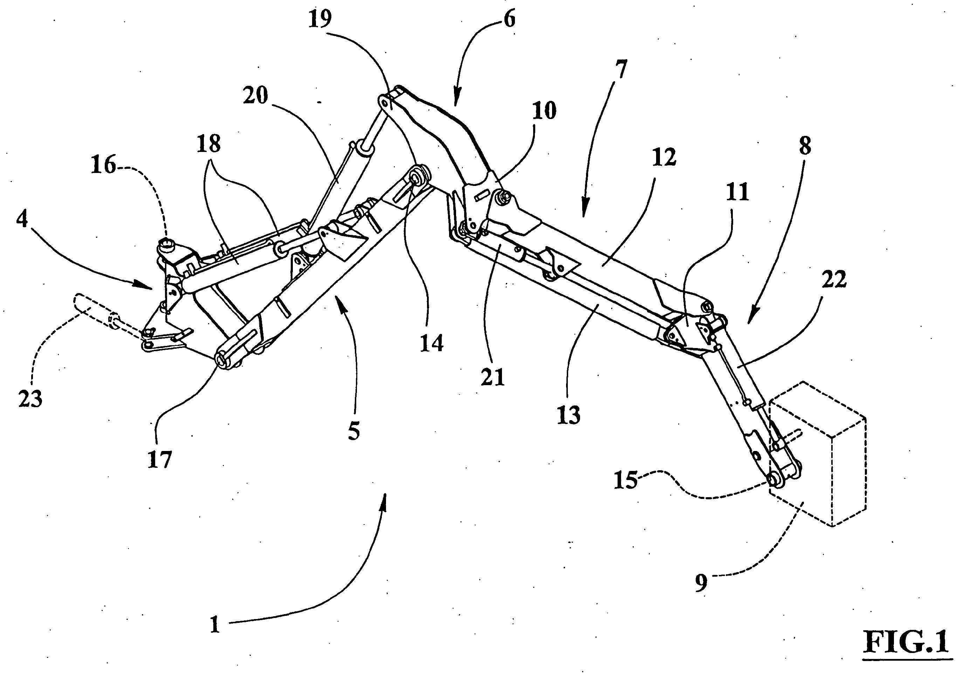

- figure 1 shows an axonometric view of the articulated hydraulic arm device particularly for agricultural tools in which some parts have been removed for better underlining other ones;

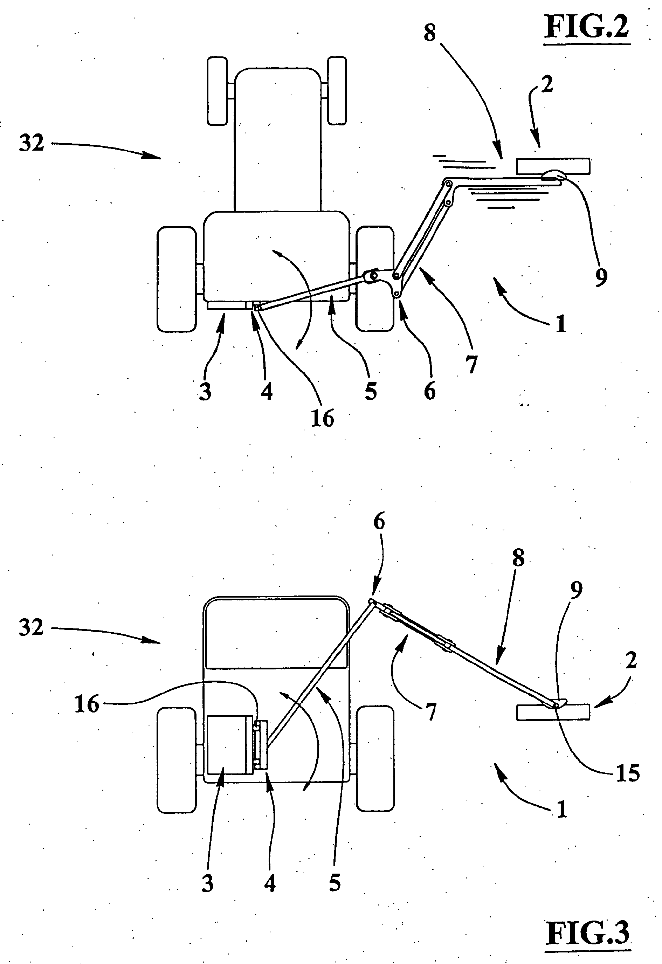

- figures 2 and 3 show respectively a schematic plan view and a schematic back view of the figure 1 device, in association with a vehicle and a tool;

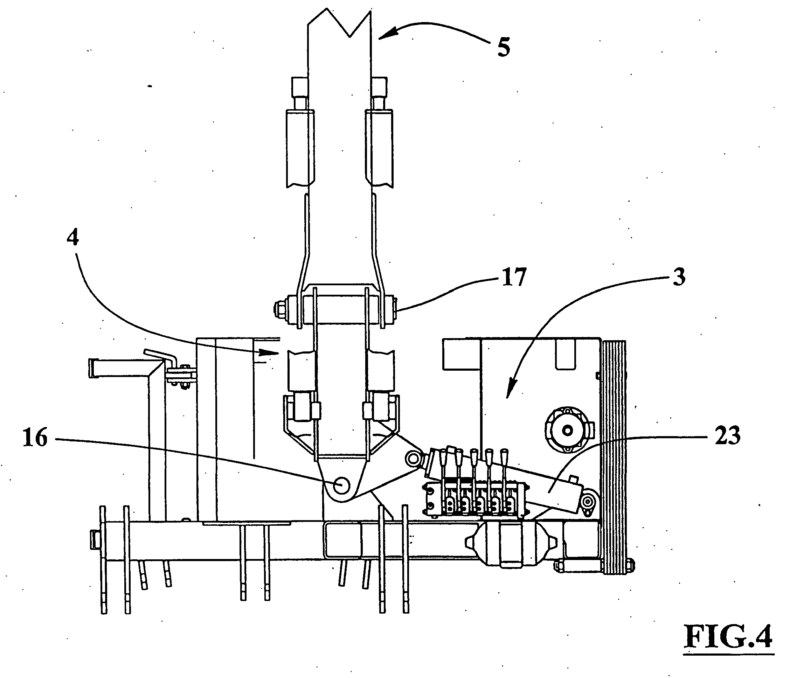

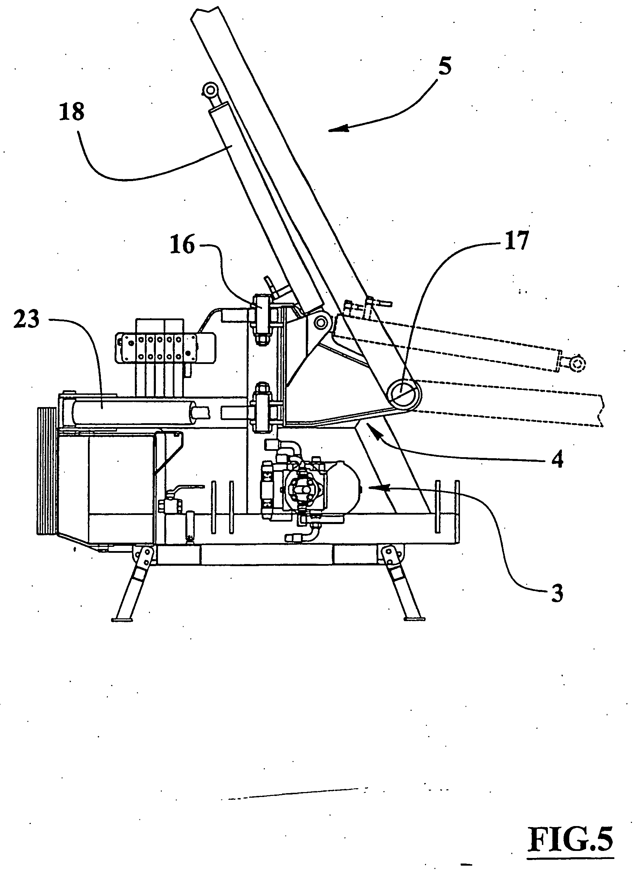

- figures 4 and 5 show respectively a partial plan view and a partial side view of a first articulated joint means of figure 1;

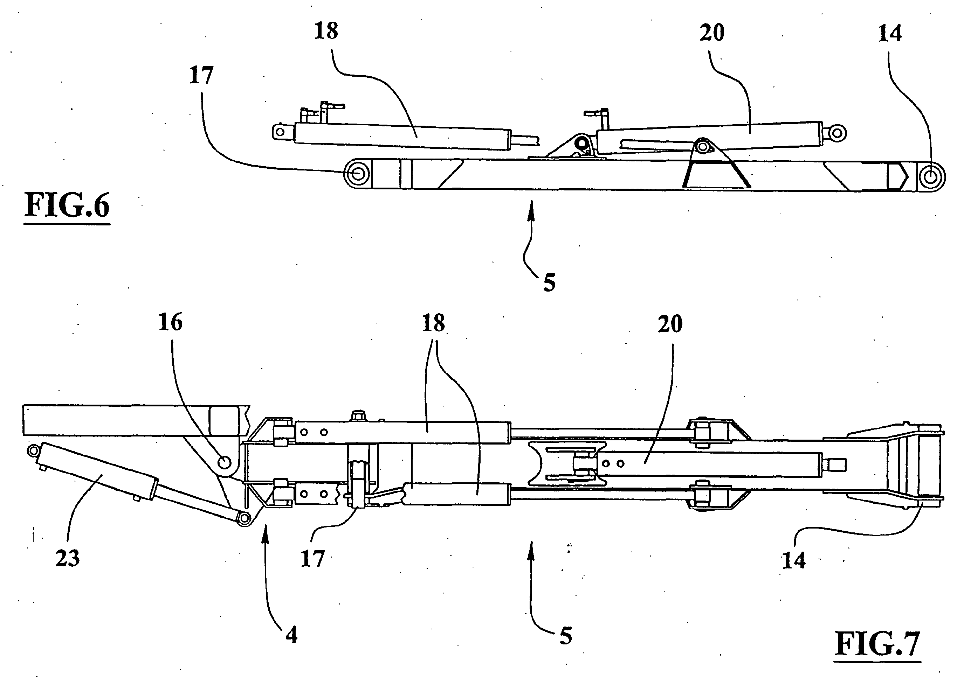

- figures 6 and 7 show respectively a schematic partial side view and a schematic partial plan view of a first beam means of figure 1;

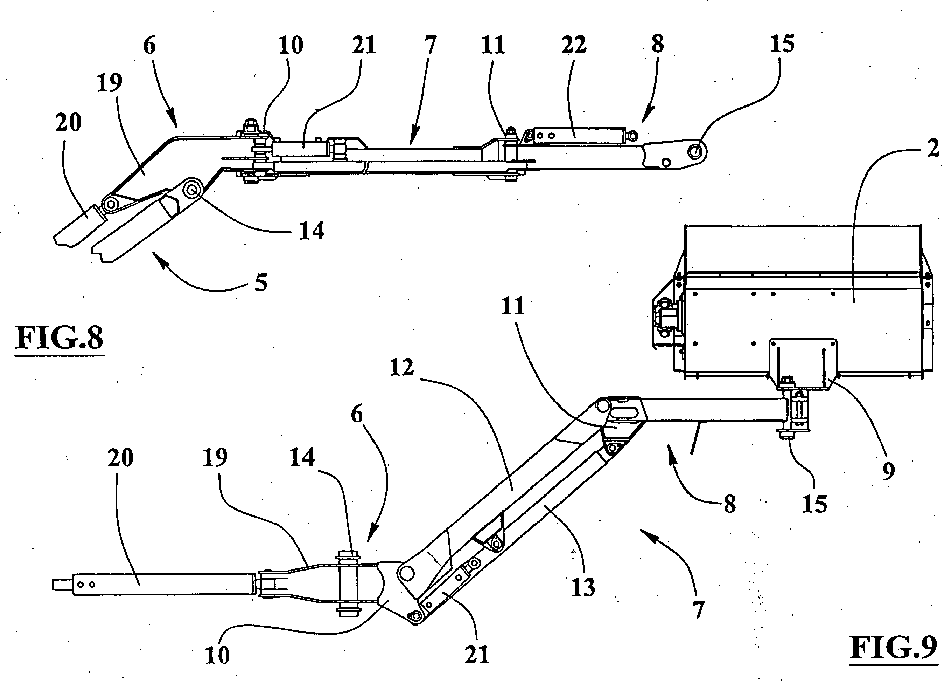

- figures 8 and 9 show schematic partial side view and a schematic partial plan view of the figure 1 device.

With reference to figures from 1 to 9, numeral 1 indicates the device object of the present invention associated to a vehicle 32 and to an agricultural tool 2.

The device 1 includes, in cascade starting from the vehicle 32, an hydraulic driving unit 3 fixed to the vehicle 32 and a first articulated joint means 4, a first beam 5, a second articulated joint means 6, a articulated quadrilateral means 7, a second beam means 8, a connection means 9 for supporting the tool 2.

The first articulated joint means 4 is connected to the vehicle 32 through a third rotation means 16 consisting of an approximately vertical pivot engaged to related seats to allow an almost horizontal rotation of said first articulated joint means 4.

The first articulated joint means 4 has a fourth rotation means 17, with axis approximately perpendicular to the third rotation means 16 and to the first beam 5, for connecting an end of the first beam 5 and for allowing the rotation of the latter in an almost vertical plane.

The opposed end of the first beam 5 has a first rotation means 14, substantially parallel to the fourth rotation means 17, for connecting the approximately median portion of the articulated joint means 6, which consequently can rotate around an axis almost perpendicularly to the first beam means 5.

The articulated joint means 6 has, in correspondence of an end, an extension 19 and, in correspondence of the other end, a widened portion which carries out a first member 10 of the articulated quadrilateral means 7 and nearly parallel to the first rotation means 14.

The ends of the first member 10 are connected to ends of the third member 12 and the fourth member 13 of the quadrilateral means 7; the remaining ends of the third member 12 and the fourth member 13 are connected to the ends of a second member 11 of the quadrilateral mean. The connections between the ends of the members 10, 11, 12 and 13 are carried out by pins reciprocally parallel and orthogonal to the plane defined by said members to allow the movement of the quadrilateral 7.

Therefore the first and second members 10, 11 are reciprocally opposed to the third and fourth members 12, 13.

The opposed members of the quadrilateral means 7 have the same length, thus the articulated quadrilateral means 7 has a parallelogram shape, whose ends are defined by the connection pivots between the members of this last mean.

The third 12 and fourth 13 members have a length considerably greater than the length of the remaining member 10, 11 and are respectively constituted by a tough box element, fit to hold the weight of the downstream elements of the device 1, and by lighter tubular element fit to transmit the longitudinal forces for the parallel motion of the first 10 and second 11 members.

A portion of the end of the second beam means 8, opposed to the tool 2, constitutes the second member 11 of the quadrilateral means 7.

The remaining end of the second beam means 8 has a second rotation means 15 of the connection means 9 of the tool 2.

The rotation axis of the second rotation means 15 is almost perpendicular to the beam means 8 and approximately parallel to the plane defined by the articulated quadrilateral means 7 and parallel to the axis of the first rotation means 14.

The first articulated joint means 4 is interconnected to the vehicle 32, through a first actuator 23, and to the first beam means 5, through a couple of second parallel actuators 18.

The first actuator 23 rotates the device 1 around the axis of the third rotation means 16 and the second actuators 18 rotate the first beam means 5 around the axis of the fourth rotation means 17 on a vertical plane.

The extension 19 of the second articulated joint means 6 is interconnected to the first beam 5 through third actuator means 20 that rotates the second articulated joint means 6 around the axis of the first rotation means 14.

The invention provides that the third actuator means 20 can include a couple of parallel actuators, at least partially interposed between second actuator means 18 and positioned to form a kind of "X" with the last ones.

The operation of the quadrilateral 7 is carried out by a fourth actuator 21 interposed between an end of the fourth member 13 and the third member 12 in order to vary the quadrilateral 7 shape.

The rotation of the connection means 9, and therefore the rotation of the tool 2, is carried out by a fifth actuator 22 interposed between this last means and the second beam means 8.

The actuators 18, 20, 21, 22, 23 are of hydraulic type and are supplied by respective valves of manual type of the hydraulic driving unit 3 and positioned in correspondence of the latter or in the cab of the vehicle 32.

It is also provided that the connection means 9 can have an articulated joint, known and not shown, rotating around a axis perpendicular to the axis of the second rotation means 15 and operated by a linear actuator to achieve a further orientation possibility of the tool 2.

The operation of the device 1 provides that an operator operates the manual valves to move and orient the tool 2 in correspondence of the vehicle motion or standing.

In an standard condition in which the device is positioned almost sideways to the vehicle 32 and in which the operator must move forward or backward the tool 2, said operator will be able first to act on the valve of the fourth actuator 21, substantially obtaining the desired motion and afterward and eventually to act on other valves to obtain the small necessary distance adjustments from the ground or from said vehicle, without needing to coordinate the contemporary or alternate driving of several valves and without needing to correct the orientation of the tool 2.

In the exemplificative case in which this tool consists of a mowing bar having width wider than the width of the passage to be mowed, the operator can reduce the transversal encumbrance of the bar operating the articulated joint actuator for inclining said bar with respect to the motion direction.

It is provided a variant of the device 1 in which the valves are electrically operated and are controlled by to digital control mean, known and not shown, connected to angle sensors, consisting for instance of an encoder or a watertight potentiometer known and not shown, of the rotation means first 14, second 15, third 16 and fourth 17, and of the articulated quadrilateral means 7.

The digital control means have a microprocessor, memories, interfaces, for driving the valves and acquiring data from the angle sensors, and a user interface.

The user interface has an input device, for instance inclusive of one or two driving means of the type so called joystick or similar, totally having as many motion degrees, linear and rotatory, as there are freedom degrees of the tool 2. By means of the input device, the operator sets the desired translating movements of the tool 2 along three Cartesian axes and eventually those rotatory.

The digital control means, through a program including the motion laws of the device 1, convert in real time the motion instructions set through the input device, in valve drives such to perform, through the device actuators, the desired movements set by the operator.

The user interface may also include a display of the position of the device 1 with respect to the vehicle 32.

The main advantage of the present invention is to provide an articulated hydraulic arm device particularly for an agricultural tool suitable to be installed on self-moving and tow vehicles and fit for orienting and positioning a tool with high freedom of movement and particularly in rear and front positions, with respect to the vehicle, near and at the maximum distance from said vehicle, maintaining the tool in correspondence of the ground and in elevated positions.

Other advantage is to provide a device easy to be moved and driven by an operator and which can utilize the whole working width of the tool in every operational condition.

Further advantage of the present invention is to provide a device easy to be manufactured, cheap and reliable.

## Claims

1. Articulated hydraulic arm device, particularly for an agricultural tool (2), and including a first beam means (5) connected to a vehicle (32) through a first articulated joint means (4) and a second beam means (8) rotating with respect to the first beam means (5) and interposed between the latter and the tool (2); said device (1) further including an articulated quadrilateral means (7), constituted by first (10) and second (11) members and by third (12) and fourth (13) members respectively opposed, and interposed between the first (5) and second (8) beam means; said articulated quadrilateral means (7) being provided to allow at least a translation movement of the second means beam (8) with respect to the first beam means (5), a second articulated joint means (6) being connected to the first beam means (5) through a first rotation means (14); said device (1) being **characterized in that** the first articulated joint means (4) is connected to the vehicle (32) and to the first beam means (5) respectively through third (16) and forth (17) rotation means with axes respectively and approximately vertical and parallel to the first rotation means (14)

2. Device according to claim 1 **characterized in that** the first member (10) of the quadrilateral means (7) is constituted by a portion of a second articulated joint means (6) rotatably connected to the free end of the first beam means (5).

3. Device according to claim 2 **characterized in that** the first rotation means (14) has rotation axis approximately perpendicular to the first beam means (5).

4. Device according to claim 1 **characterized in that** the second member (11) of the quadrilateral means (7) is constituted by a portion of the end of the second beam means (8) opposed to the tool (2).

5. Device according to claim 1 **characterized in that** the opposed members of the quadrilateral means (7) have the same length so that the articulated quadrilateral means (7) has a parallelogram shape.

6. Device according to claim 1 **characterized in that** the tool (2) is connected to the second beam means (8) through a connection means (9).

7. Device according to claim 6 **characterized in that** the connection means (9) has a second rotation means (15) for connecting the second beam means (8) and having rotation axis approximately perpendicular to the latter.

8. Device according to claims 5 and 7 **characterized in that** the rotation axis of the second rotation means (15) is parallel to the axis of the first rotation means (14).

9. Device according to claim 1 **characterized in that** the first articulated joint means (4) is interconnected to the vehicle (32) through a first actuator (23) and is interconnected to the first beam means (5) by a couple of almost parallel second actuators (18).

10. Device according to claim 2 **characterized in that** the second articulated joint means (6) has an extension (19), opposed to the first member (10) and interconnected to the first beam (5) through third actuator means (20).

11. Device according to claim 10 **characterized in that** the third actuator means (20) includes a couple of parallel actuators.

12. Device according to claims 11 charactertzed in that the two actuators of the third actuator means (20) are at least partially interposed between second actuators (18).

13. Device according to claims 11 **characterized in that** the third actuator means (20) and second actuator means (18) are "X" positioned.

14. Device according to claim 1 **characterized in that** the quadrilateral (7) is operated by at least a fourth actuator (21) and that the connection means (9) is interconnected to the second beam (8) by at least a fifth actuator (22).

15. Device according to claims from 9 to 11 **characterized in that** said actuators (18, 20, 21, 22, 23) are of hydraulic type and are fed through respective manually or electrically operated valves.

16. Device according to claims 1 and 7 **characterized in that** includes a plurality of angle sensors at least of the first (14), second (15), third (16) and fourth (17) rotation means, and of the articulated quadrilateral means (7).

17. Device according to claims 15 and 16 **characterized in that** said electrically operated valves are controlled by digital control means connected to said angle sensors and programmed for converting motion instructions, set on a related user interface, into drives of said valves to perform said motion instructions.

## Patentansprüche

1. Mehrgliedrige Hydraulikarmvorrichtung, insbesondere für ein landwirtschaftliches Gerät (2), die ein erstes Armelement (5) umfaßt, das über ein erstes Gelenkelement (4) und ein zweites Armelement (8), das sich in Bezug auf das erste Armelement (5) dreht und zwischen dem letzteren und dem Gerät (2) angeordnet ist, mit einem Fahrzeug (32) verbunden ist; wobei die besagte Vorrichtung (1) weiterhin ein Viergelenk (7) umfaßt, das von einander jeweils gegenüberliegend und zwischen dem ersten (5) und dem zweiten Armelement (8) angeordneten ersten (10) und zweiten (11) Elementen beziehungsweise dritten (12) und vierten (13) Elementen gebildet wird; wobei das besagte Viergelenk (7) derart ausgebildet ist, daß es wenigstens eine Bewegungsübertragung des zweiten Armelementes (8) in Bezug auf das erste Armelement (5) ermöglicht, wobei ein Gelenkelement (6) mit dem ersten Armelement (5) über ein erstes Drehelement (14) verbunden ist; wobei die besagte Vorrichtung (1) **dadurch gekennzeichnet ist, daß** das erste Gelenkelement (4) mit dem Fahrzeug (32) beziehungsweise mit dem ersten Armelement (5) über dritte (16) und vierte Drehelemente (17) verbunden ist, deren jeweilige Achsen in etwa zu dem ersten Drehelement (14) senkrecht und parallel verlaufen.

2. Vorrichtung gemäß Anspruch 1, **dadurch gekennzeichnet, daß** das erste Element (10) des Viergelenks (7) von einem Teil des zweiten Gelenkelementes (6) gebildet wird, das drehbar mit dem freien Ende der ersten Armelementes (5) verbunden ist.

3. Vorrichtung gemäß Anspruch 2, **dadurch gekennzeichnet, daß** die Drehachse des ersten Drehelementes (14) in etwa senkrecht zum ersten Armelement (5) liegt.

4. Vorrichtung gemäß Anspruch 1, **dadurch gekennzeichnet, daß** das zweite Element (11) des Viergelenks (7) von einem Teil des Endes der zweiten Armelementes (8) gebildet wird, der dem Gerät (2) gegenüber liegt.

5. Vorrichtung gemäß Anspruch 1, **dadurch gekennzeichnet, daß** die einander gegenüberliegenden Elemente des Viergelenks (7) die gleiche Länge aufweisen, so daß das Viergelenk (7) eine Parallelogrammform aufweist

6. Vorrichtung gemäß Anspruch 1, **dadurch gekennzeichnet, daß** das Gerät (2) über ein Anschlußelement (9) mit dem zweiten Armelement (8) verbunden ist.

7. Vorrichtung gemäß Anspruch 6, **dadurch gekennzeichnet, daß** das Anschlußelement (9) ein zweites Drehelement (15) für das Anschließen des zweiten Armelementes (8) aufweist und daß es eine Drehachse aufweist, die zum letzteren ungefähr senkrecht verläuft.

8. Vorrichtung gemäß den Ansprüchen 5 und 7, **dadurch gekennzeichnet, daß** die Drehachse des zweiten Drehelementes (15) zur Achse der ersten Drehelementes (14) parallel liegt.

9. Vorrichtung gemäß Anspruch 1, **dadurch gekennzeichnet, daß** das erste Gelenkelement (4) mit dem Fahrzeug (32) über einen ersten Stellantrieb (23) verbunden ist und mit dem ersten Armelement (5) über ein Paar in etwa paralleler zweiter Stellantriebe (18) verbunden ist.

10. Vorrichtung gemäß Anspruch 2, **dadurch gekennzeichnet, daß** das zweite Gelenkelement (6) eine Verlängerung (19) aufweist, die dem ersten Element (10) gegenüberliegend angeordnet und die mit dem ersten Armelement (5) über ein drittes Antriebselement (20) verbunden ist.

11. Vorrichtung gemäß Anspruch 10, **dadurch gekennzeichnet, daß** das dritte Antriebselement (20) ein Paar paralleler Stellantriebe aufweist.

12. Vorrichtung gemäß Anspruch 11, **dadurch gekennzeichnet, daß** die zwei Stellantriebe des dritten Antriebselementes (20) wenigstens teilweise zwischen den zweiten Stellantrieben (18) angeordnet sind.

13. Vorrichtung gemäß Anspruch 11, **dadurch gekennzeichnet, daß** die dritten Antriebselemente (20) und die zweiten Antriebselemente (18) "X"-förmig angeordnet sind.

14. Vorrichtung gemäß Anspruch 1, **dadurch gekennzeichnet, daß** das Viergelenk (7) über wenigstens einen vierten Stellantrieb (21) angetrieben wird und daß das Anschlußelement (9) mit dem zweiten Armelement (8) über wenigstens einen fünften Stellantrieb (22) verbunden ist.

15. Vorrichtung gemäß den Ansprüchen 9 bis 11, **dadurch gekennzeichnet, daß** die besagten Stellantriebe (18, 20, 21, 22, 23) hydraulischer Art sind und durch zugeordnete manuell oder elektrisch angesteuerte Ventile beaufschlagt werden.

16. Vorrichtung gemäß den Ansprüchen 1 und 7, **dadurch gekennzeichnet, daß** sie eine Anzahl der Winkel-Sensoren wenigstens der ersten (14), zweiten (15), dritten (16) und vierten (17) Drehelemente und des Viergelenks (7) umfaßt.

17. Vorrichtung gemäß den Ansprüchen 15 und 16, **dadurch gekennzeichnet, daß** die besagten elektrisch angesteuerten Ventile über digitale Steuerungselemente angesteuert werden, die an die besagten Winkel-Sensoren angeschlossen sind und die derart programmiert sind, daß sie Bewegungsanweisungen, die von einer zugeordneten Benutzerschnittstelle aus erteilt werden, in Antriebsimpulse für die besagten Ventile umwandelt werden, um die besagten Bewegungsanweisungen auszuführen.

## Revendications

1. Dispositif de bras articulé hydraulique, en particulier pour un outil agricole (2), comprenant un premier moyen de barre (5) connecté à un véhicule (32) par l'intermédiaire d'un premier moyen de joint articulé (4) et un second moyen de barre (8) pivotant par rapport au premier moyen de barre (5) et interposé entre ce dernier et l'outil (2) ; ledit dispositif (1) comprenant en outre un moyen quadrilatéral articulé (7), constitué d'un premier (10) et deuxième (11) éléments et d'un troisième (12) et quatrième (13) éléments respectivement opposés, et interposés entre les premier (5) et second (8) moyens de barre ; ledit moyen quadrilatéral articulé (7) étant fourni de façon à permettre au moins un mouvement de translation du second moyen de barre (8) par rapport au premier moyen de barre (5), un second moyen de joint articulé (6) étant relié au premier moyen de barre (5) par l'intermédiaire d'un premier moyen de rotation (14) ; ledit dispositif (1) étant **caractérisé en ce que** le premier moyen de joint articulé (4) est relié au véhicule (32) et au premier moyen de barre (5) respectivement par l'intermédiaire de troisième (16) et quatrième (17) moyens de rotation, avec des axes respectivement et approximativement verticaux et parallèles au premier moyen de rotation (14).

2. Dispositif selon la revendication 1, **caractérisé en ce que** le premier élément (10) du moyen quadrilatéral (7) est constitué d'une partie d'un second joint articulé (6) relié de manière rotative à l'extrémité libre du premier moyen de barre (5).

3. Dispositif selon la revendication 2, **caractérisé en ce qu'**un premier moyen de rotation (14) a un axe de rotation approximativement perpendiculaire au premier moyen de barre (5).

4. Dispositif selon la revendication 1, **caractérisé en ce que** le second élément (11) du moyen quadrilatéral (7) est constitué d'une partie de l'extrémité du second moyen de barre (8) opposé à l'outil (2).

5. Dispositif selon la revendication 1, **caractérisé en ce que** les éléments opposés du moyen quadrilatéral (7) ont la même longueur de sorte que le moyen quadrilatéral articulé (7) ait une forme de parallélogramme.

6. Dispositif selon la revendication 1, **caractérisé en ce que** l'outil (2) est relié au second moyen de barre (8) par l'intermédiaire d'un moyen de connexion (9).

7. Dispositif selon la revendication 6, **caractérisé en ce que** le moyen de connexion (9) a un deuxième moyen de rotation (15) pour relier le second moyen de barre (8) et avoir un axe de rotation approximativement perpendiculaire à ce dernier.

8. Dispositif selon la revendication 5 et la revendication 7, **caractérisé en ce que** l'axe de rotation du deuxième moyen de rotation (15) est parallèle à l'axe du premier moyen de rotation (14).

9. Dispositif selon la revendication 1, **caractérisé en ce que** le premier moyen de joint articulé (4) est interconnecté au véhicule (32) par l'intermédiaire d'un premier actionneur (23) et est interconnecté au premier moyen de barre (5) par l'intermédiaire d'un couple de deuxièmes actionneurs presque parallèles (18).

10. Dispositif selon la revendication 2 **caractérisé en ce que** le second moyen de joint articulé (6) possède une extension (19), opposée au premier élément (10) et interconnectée à la première barre (5) par l'intermédiaire d'un troisième moyen d'actionneur (20).

11. Dispositif selon la revendication 10, **caractérisé en ce que** le troisième moyen d'actionneur (20) comprend un couple d'actionneurs parallèles.

12. Dispositif selon la revendication 11, **caractérisé en ce que** les deux actionneurs du troisième moyen d'actionneur (20) sont, au moins en partie, interposés entre les deuxièmes actionneurs (18).

13. Dispositif selon la revendication 11, **caractérisé en ce que** le troisième moyen d'actionneur (20) et le deuxième moyen d'actionneur (18) sont positionnés en forme de croix « X ».

14. Dispositif selon la revendication 1, **caractérisé en ce que** le quadrilatère (7) est actionné par au moins un quatrième actionneur (21) et **en ce que** le moyen de connexion (9) est interconnecté à la seconde barre (8) par au moins un cinquième actionneur (22).

15. Dispositif selon les revendications de 9 à 11, **caractérisé en ce que** lesdits actionneurs (18, 20, 21, 22, 23) sont des actionneurs de type hydraulique et sont alimentés par l'intermédiaire de soupapes respectives actionnées électriquement ou manuellement.

16. Dispositif selon les revendications 1 et 7, **caractérisé en ce qu'**il comprend une pluralité de capteurs d'angles au moins du premier (14), du deuxième (15), du troisième (16) et du quatrième (17) moyens de rotation et du moyen quadrilatéral articulé (7).

17. Dispositif selon les revendications 15 et 16, **caractérisé en ce que** lesdites soupapes actionnées électriquement sont commandées par des moyens de commande numériques connectés auxdits capteurs d'angles et programmés pour convertir des instructions de mouvement, configurées sur une interface utilisateur relative, en des fonctions desdites soupapes pour exécuter lesdites instructions de mouvement.
